# EUROPEAN PATENT APPLICATION

(11) **EP 2 189 576 A1**
(43) Date of publication of application: **26.05.2010**
(21) Application number: 08380320.5
(22) Date of filing: 19.11.2008
(51) Int. Cl.: E02D 27/52

(54) **Foundation system for marine structures in deep water**

(71) Applicant: Flota Proyectos Singulares, S.A., 28050 Madrid (ES)
(72) Inventor: Martinez Prieto, Jose Antonio, 28050 Madrid (ES); Vazquez Salgueiro, Antonio, 28050 Madrid (ES)
(74) Representative: Toro Gordillo, Ignacio Maria

(57) **Abstract**

The invention relates to a system which is based on using cellular caissons, i.e., provided with tight compartments, which are floating and made of concrete, which are manufactured in floating docks (9) and are subsequently towed to the definitive location site by means of floatation on the seawater, being located prior to the closure by means of an upper slab made of concrete and the assembly of a concrete shaft (5) for the mast (6) of the generator equipment (7) on a grounding bed (11) previously prepared on the seabed (12), the floating caisson or caissons (1) being positioned by means of the capstans (14) of a pontoon (13). Once the floating caisson or caissons (1) are placed on the grounding bed (11), the mast (6) of the wind generator equipment (7) is assembled in the shaft (5), the mentioned wind generator equipment being definitively located on the seabed and wherein the parts made of concrete forming the caisson or caissons (1) and the shaft (5) are submerged, whereas the rest are above sea level.

## Description

### Object of the Invention

The present invention relates to a foundation system for marine structures in deep water, the foundation being provided for wind generator equipment installed off-shore, based on the use of floating and cellular caissons made in a floating dock, which are completed with an upper slab and the corresponding submerged base of the shaft, either in the same floating dock in which they are made or with the caisson floating or provisionally anchored.

The object of the invention is to allow assembling wind generator apparatus on seabeds, at depths greater than those currently allowed by conventional systems, and even to allow the installation in any type of seabed or ground.

### Background of the Invention

Marine foundation systems for off-shore wind generators are known, such that up until today the foundations could be located at an approximate depth of 15 m of sea depth, using to that end concreted parts in dry docks, which are transported in large pontoons and installed with cranes or derricks.

In addition, so-called monopile systems are used for greater depths, the latter being limited to their application at sea depths not greater than 30 m and in non-rocky beds, since at greater sea depths and rocky beds or with little surface sandy stratum strength, it is virtually non-viable to drive in monopiles.

In any case, documents are known which correspond to patents describing foundations, installations, use of floating elements or cellular caissons, etc., for either application, i.e., both for installing wind generators and for constructing dam or dock structures, or even wave protection devices.

In such sense, invention patent B 1004982 can be mentioned, which describes a process for constructing a dam or dock structure including a bedplate and preferably two side vertical walls forming prefabricated elements which are transported from the manufacturing site to the installation site, in order to carry out the corresponding juxtaposition and assembly of the elements.

Invention patent FR 2720086 can also be mentioned, which describes a process for installing a wave protection device, and the device of which is said to comprise a support fixed in a predetermined site of the seabed, as well as one or more floating caissons, which are transported by floatation from the manufacturing site to the assembly site, where they are arranged on the support with the collaboration of guiding means.

Invention patent JP 2005069025 describes a structure and corresponding installation method for supporting and assembling a wind energy generator, its structure using a floating body on which the mast of the wind generator is arranged, although it does not describe how the floating elements are made or how they are transported from their manufacturing site to their implementation site, etc.

Japanese patent JP 2002206474 can also be mentioned, which describes a foundation which is established on the seabed for the assembly of a wind generator, using floating caissons on which the column corresponding to the wind generator is arranged, such that in this case, it also does not state or describe how the floating caissons are manufactured or how they are transported from the manufacturing site to the implementation site, although it does state that these floating caissons in their implementation on the seabed are protected with breakwater blocks located around them.

Finally, Japanese patents JP 9195282 and JP 60126430 describe floating structures which are arranged on the sea, but the description is focused on the way to connect the floating structures in question to one another, without specifying whether or not they are useful for assembling and installing a wind generator.

### Description of the Invention

The foundation system for marine structures object of the invention is provided for its application in deep water and to serve as a support for wind generator equipment installed off-shore, based on the use of cellular and floating caissons which are made in a floating dock, such that these caisson are transported by floating to the implementation site from the manufacturing site thereof or from a storage site, towed by traditional means, being anchored in the installation site by means of sinking a series of compartments tightly established inside the floating caissons, with or without the aid of auxiliary floats.

The foundation system is basically based on executing a process with the following operational phases:
- Manufacture of the caissons in a floating dock and completing them afloat or inside the same floating dock.
- Manufacture of a bank for supporting the foundation, a prior dredging and a dumping of a gravel or rubble type material possibly being necessary to support the floating caisson.
- Transport floating on the floating caisson, with the shaft corresponding to the base of the mast of the wind generator equipment.
- Anchorage of the floating element by means of sinking all or part of its tight compartments or cells.
- Ballast of its compartments with ballast material, being able to use sand, gravel or concrete as material.
- Installation of the rest of the mast of the wind generator on the base of the shaft duly connected to the floating caisson, and which projects from the low water level once it is anchored.

Based on this form of execution, a foundation by gravity can be used in which the depth exceeds 15 m of sea depth, which depth was usually accessible in the manufacture of conventional foundations, further being able to use a much more volumetric and heavier foundation than those used up until today, whereby the necessary resistance capacity could be suitable to withstand this greater stress that will appear with the increase of depth.

Based on the system of the invention, the monopole structures can even surpass depth of more than 30 m, which enables the use of wind generators in rocky beds or beds with little strength of the sandy surface stratum.

In short, by means of the system of the invention, the range of installation of off-shore wind generator equipment can be extended to depths and types of terrain which are currently outside the actual installation possibilities.

In addition to the possibility of anchoring at great depths by means of the system of the invention, one foundation per day can be anchored, with the special particularity that once the foundation is anchored, all the works are above sea level.

### Description of the Drawings

To complement the description which will be made below and with the aim of aiding to better understand the features of the invention according to a preferred practical embodiment thereof, a set of drawings is attached as an integral part of said description in which the following has been shown with an illustrative and non-limiting character:
Figure 1 shows a schematic representation of wind generator equipment assembled on a deep marine structure foundation made according to the system of the invention.
Figures 2 to 9 show different views corresponding to the different phases of executing the foundation system of the invention.

### Preferred Embodiment of the Invention

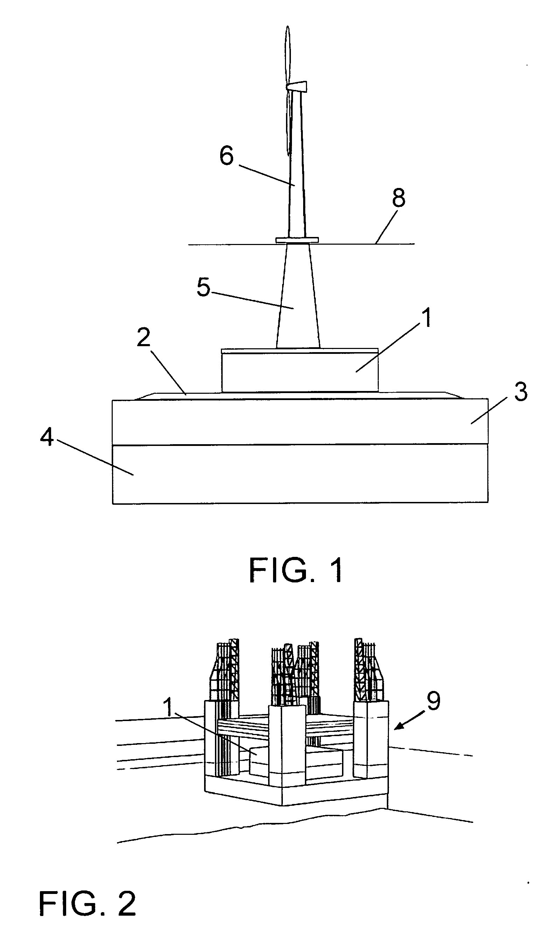

As can be seen in schematic Figure 1, the foundation system uses floating caissons (1) on a seabed supported on a bank (2) and which seabed can be a granular floor (3) on a rock floor (4), the floating caisson (1) incorporates a concrete shaft (5) on which the corresponding mast (6) of the wind generator (7) will be assembled, being able to see with respect to the seabed (8) a height of the wind generator which can reach 80 m, and a bottom height, i.e., between the level (8) and the bank (2), of 30 m and even greater, while the height of the floating caisson (1) can be approximately 9 m.

In other words, the technology used will be a technology within anyone's reach, with the possibility of foundation at greater depths than those currently achieved and allowing carrying out work both in sandy and rocky beds, with a lower execution cost than other systems provided for the same purpose.

As regards the floating caisson (1), it can have any geometric shape and be provided with tight compartments.

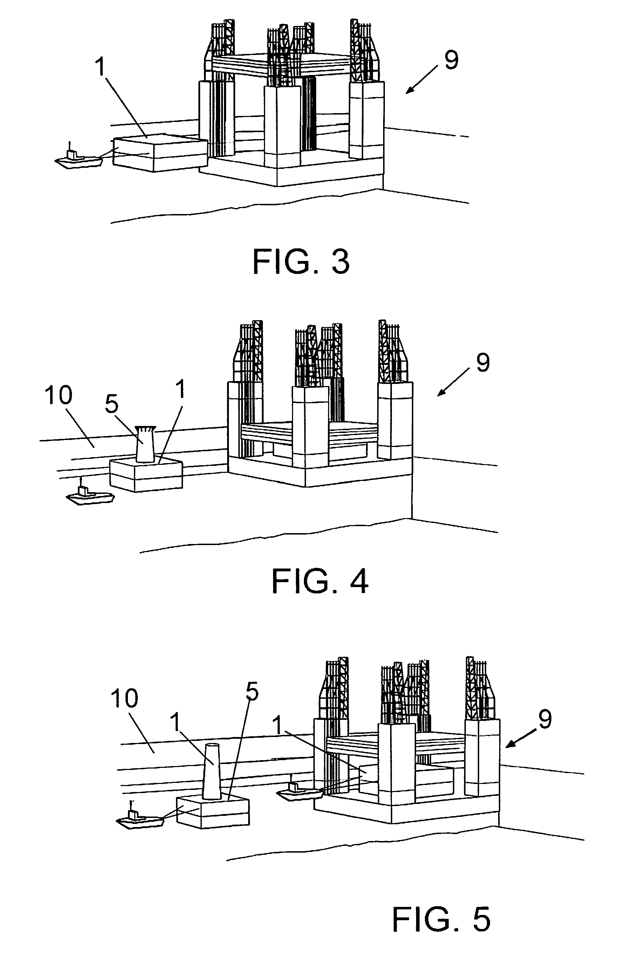

Said floating caisson (1) will be made of concrete, such that once it is made in the floating dock (1), as shown in Figure 2, it is then launched, as shown in Figure 3, and then said caisson (1) is moored to a pier (10), applying an upper slab and concreting the shaft (5) for assembling the corresponding mast (6) of the wind generator (7), which phase will correspond to that shown in Figure 4.

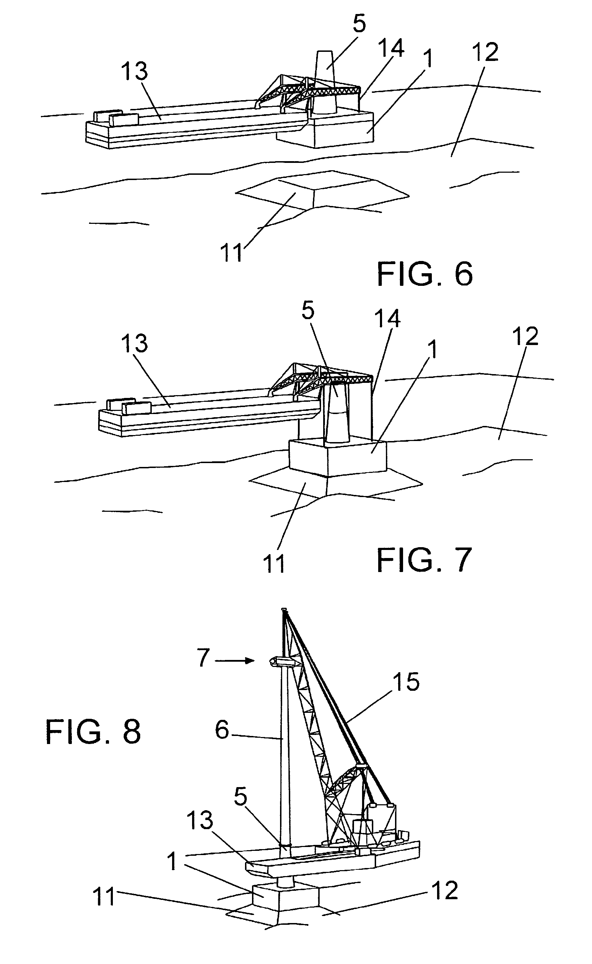

Then and as shown in Figure 5, the floating caisson (1) is towed with the shaft (5) to the site where it will be definitively located, such that prior to anchoring this caisson (1), the material necessary for forming the grounding bed (11) of the caisson (1) will be dumped, i.e., the area of the seabed (12) will be leveled, as shown in Figure 6, in order to establish this bed (11) where the caisson (1) will be deposited or supported.

The caisson (1) is then moored, for its anchorage, to a pontoon (13), the capstans (14) being hitched to the caisson, as is seen in this mentioned Figure 6.

Then, and in a following phase as shown in Figure 7, the cells or compartments of the caisson (1) are automatically ballasted and the capstans (14) of the pontoon (13) are guided, so that they always work within a working margin, the caisson (1) being located on the grounding bed (11), as is seen in Figure 7.

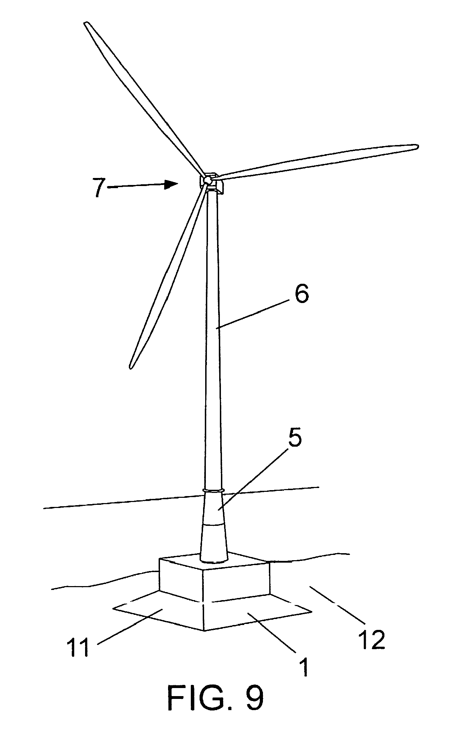

Once the floating caisson (1) is duly placed in its correct location by means of a floating crane or derrick (15), the wind generator (7) is installed and specifically, the mast (6) is assembled on the shaft (5), in which mast (6) the actual generator equipment is arranged at the upper part, the latter being rendered as shown in Figure 9.

In addition to the features and advantages already mentioned of the foundation on a seabed according to the system of the invention, the application can be valid for sea depths between 15 and 40 m, and even deeper sea depths with minimum variations.

In relation to the submerged part of the shaft (5), it does not need a special design, the maintenance furthermore being minimal because the submerged elements, specifically the part of the shaft (5) and the floating caisson (1), are made of concrete, therefore it is suitable for rocky beds or beds with little strength of the sandy stratum.

## Claims

1. A foundation system for marine structures in deep water which, based on the use of floating and cellular caissons (1) made of concrete, which are arranged on the actual seabed to serve for the assembly of the corresponding mast (6) of wind generator equipment (7), and wherein the cellular and floating caisson or caissons are transported by floating on the water from the manufacturing site to the definitive assembly site, is **characterized in that** said floating cellular caisson or caissons (1) made of concrete are made in a floating dock (9), from which the floating caisson or caissons (1) are launched and transported by floatation from said floating dock (9) to a pier (10) where an upper slab with a concrete shaft (5) is applied for the assembly of the corresponding mast (6) of the wind generator equipment (7); with the particularity that the floating caisson or caissons (1) are arranged, after being hauled by floating, on a grounding bed (11) prepared on the seabed (12), the floating caisson or caissons (1) being positioned on said grounding bed (11) by means of capstans (14) from a pontoon (13); it furthermore having been provided that prior to depositing the floating caisson or caissons (1) on the grounding bed (11) the compartments of the former are ballasted.

2. The foundation system for marine structures in deep water according to claim 1, **characterized in that** on the upper closing slab of the floating caisson (1), and in the process for mooring on the pier (10), the shaft (5) on which the mast (6) of the actual wind generator equipment (7) will be assembled is concreted, and which shaft (5) is submerged in water, the mast (6) projecting above the level of the seawater itself once it is assembled.
